(19) **Europäisches Patentamt European Patent Office Office européen des brevets**

(11) **EP 4 091 892 B1**

(12) **EUROPEAN PATENT SPECIFICATION**

(45) Date of publication and mention of the grant of the patent:
**26.02.2025 Bulletin 2025/09**

(21) Application number: **20913211.7**

(22) Date of filing: **07.07.2020**

(51) International Patent Classification (IPC):
**B60W 20/00** (2016.01)     **B60W 20/15** (2016.01)
**B60W 10/02** (2006.01)     **B60K 6/46** (2007.10)

(52) Cooperative Patent Classification (CPC):
**B60K 6/48; B60K 6/26; B60K 6/46; B60W 10/02; B60W 10/06; B60W 10/08; B60W 10/113; B60W 20/40;** B60K 2006/268; B60K 2006/4825; B60W 2710/025; B60W 2710/083; B60W 2710/085; B60W 2710/1005; Y02T 10/62

(86) International application number:
**PCT/CN2020/100576**

(87) International publication number:
**WO 2021/143071 (22.07.2021 Gazette 2021/29)**

(54) **ENGINE CONTROL METHOD AND DEVICE FOR HYBRID VEHICLE**

MOTORSTEUERUNGSVERFAHREN UND -VORRICHTUNG FÜR EIN HYBRIDFAHRZEUG

PROCÉDÉ ET DISPOSITIF DE COMMANDE DE MOTEUR THERMIQUE D'UN VÉHICULE HYBRIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2020 CN 202010063028**

(43) Date of publication of application:
**23.11.2022 Bulletin 2022/47**

(73) Proprietor: **Hycet Transmission System (Jiangsu) Co., Ltd.**
**Baoding Research and Development Branch**
**Baoding, Hebei 071000 (CN)**

(72) Inventors:
• **LIU, Hailiang**
  **Baoding, Hebei 071000 (CN)**
• **QIN, Junchao**
  **Baoding, Hebei 071000 (CN)**
• **LIU, Jing**
  **Baoding, Hebei 071000 (CN)**
• **LIU, Ye**
  **Baoding, Hebei 071000 (CN)**
• **ZHANG, Zongfu**
  **Baoding, Hebei 071000 (CN)**
• **DOU, Zhiwei**
  **Baoding, Hebei 071000 (CN)**

(74) Representative: **Epping - Hermann - Fischer Patentanwaltsgesellschaft mbH**
**Schloßschmidstraße 5**
**80639 München (DE)**

(56) References cited:
CN-A- 102 490 718     CN-A- 107 128 298
CN-A- 107 420 535     CN-A- 109 094 553
CN-A- 110 228 461     US-A1- 2007 056 784
US-A1- 2015 344 025

• **No further relevant documents disclosed**

EP 4 091 892 B1

## Description

### FIELD

The present invention relates to the technical field of vehicles, and in particular to a method and a device for controlling an engine for a hybrid vehicle.

### BACKGROUND

At present, two major issues faced by the automobile industry in the world are environmental pollution and shortage of oil resources. Therefore, environmental protection and energy saving have become key development directions of the current and future automobile technology. At the same time, emission regulations of various countries are increasingly strict. Following this trend, hybrid vehicles with low pollution and low fuel consumption have emerged as a new generation of clean energy vehicles.

A P2-typed series hybrid vehicle is taken as an example, in which the hybrid vehicle has two drive modes: fuel drive and electric drive. Based on these two drive modes, the advantage of the hybrid vehicle is that when the vehicle completes start, it is only driven by a motor and an engine may not work until reaching a certain speed, so that the engine can be kept in the best working conditions, the power performance is desirable, and the emission is fairly low. However, for a series hybrid vehicle having an engine, a single clutch, a motor, and a dual clutch transmission (DCT), there are problems of complex structure and difficult to be controlled, especially when the engine is controlled during a travelling process, it is prone to appear unsmoothness and disturbances, which may damage the power system and affect the driving experience of the vehicle.

Document CN 109094553 A discloses an engine starting control method of a hybrid electric vehicle, Hybrid electric vehicles operate in pure electric mode, when power is required to start that engine due to an external environment or lack of power, and when it is necessary to shift the double-clutch gearbox, In order to avoid the impact of engine startup and gear shifting, at the same time, As that electric motor is close to a predetermined position in a sliding state by an engine clutch, and the first clutch and the second clutch in the double clutch gearbox are in a sliding wear state when the gear position of the double clutch gearbox is switched, and the engine clutch and the double clutch gearbox are simultaneously sliding worn to absorb the impact, thereby solving the impact problem in the power switching process of the hybrid electric vehicle.

### SUMMARY

In view of this, the present invention aims to provide an engine control method of a hybrid vehicle, so as to solve the problem of being prone to appear unsmoothness and power disturbances during the engine travelling control.

In order to achieve the above object, the technical solutions of the present invention are realized as follows.

An engine control method for a hybrid vehicle is provided, where an engine, an automatic clutch, a motor, and an input shaft of a DCT of the hybrid vehicle are connected in series in this sequence, and a total torque outputted together by the engine and the motor is applied to a wheel end through an output shaft of the DCT, and the engine control method for the hybrid vehicle includes: performing control of engine travelling start, which specifically includes: from a first start time when a first start instruction for the engine is activated by a hybrid control unit (HCU), controlling an odd-numbered gear clutch or an even-numbered gear clutch of the DCT to switch from a closed state to a sliding state, and from the first start time to a second start time when a second start instruction for the engine is activated by an engine control unit (ECU), controlling a motor torque to increase, so that the total torque remains unchanged; remaining the motor torque at the second start time unchanged from the second start time to a third start time when an oil pump of the engine starts to work; and controlling the motor torque to change from the third start time, so that a rotating speed of the engine changes synchronously with a rotating speed of the motor, and the total torque remains unchanged till an engine travelling start is completed.

Further, for the process from the first start time to the second start time, the controlling a motor torque to increase includes:

The motor torque is controlled to increase a first torque increment $T_{\Delta 1}$, where the first torque increment $T_{\Delta 1}$ is determined by the following equation:

$$T_{\Delta 1} = T_{original}(1/f_{effciency} - 1)$$

where, $T_{original}$ represents the total torque, $f_{effciency}$ represents a clutch transmission efficiency coefficient of the DCT, and the transmission efficiency coefficient relates to a master/slave rotating speed difference between the odd-numbered gear clutch or even-numbered gear clutch of the DCT.

Further, from the third start time, the controlling the motor torque to change includes: from the third start time, controlling the motor torque to increase by a preset second torque increment $T_{\Delta2}$ and remaining the current increased motor torque unchanged till a fifth start time when the engine has been started, so that the rotating speed of the engine and the rotating speed of the motor rise synchronously, where a fourth start time when the rotating speed of the engine reaches close to an idle speed of the engine is defined between the third start time and the fifth start time, and controlling the engine to start at the fourth start time; controlling the motor torque to decrease by a preset third torque increment $T_{\Delta3}$ from the fifth start time, so that the rotating speed of the engine continues to increase to the same as the rotating speed of the motor till a sixth start time, and the total torque remains unchanged; controlling the motor torque to decrease by a preset fourth torque increment $T_{\Delta4}$ from the sixth start time, so that the rotating speed of the engine decreases synchronously with the rotating speed of the motor, and the total torque remains unchanged; and controlling the motor torque to decrease relative to the increased engine torque from a seventh start time when the motor torque has decreased by the fourth torque increment $T_{\Delta4}$ to an eighth start time when the engine travelling start is completed, so as to remain the total torque unchanged.

Further, that performing the control of the engine travelling start further includes: increasing a torque applied to two ends of the automatic clutch from the sixth start time, to allow the automatic clutch to switch from the sliding state to the closed state; and/or controlling the odd-numbered gear clutch or the even-numbered gear clutch of the DCT to switch from the sliding state to the closed state from the sixth start time.

Further, the engine control method of a hybrid vehicle further includes: performing control of engine travelling shutdown, which specifically includes: from a first shutdown time when a first shutdown instruction for the engine is activated by the HCU, controlling an engine torque to decrease and the motor torque to increase, so that the total torque remains unchanged; decreasing torque applied to two ends of the automatic clutch to allow the automatic clutch to switch from the closed state to an open state from a second shutdown time when the engine torque decreases to zero; activating a second shutdown instruction for the engine at a third shutdown time when the torque applied to two ends of the automatic clutch decreases to zero, so that the rotating speed of the engine starts to decrease; determining a travelling shutdown process of the engine is completed from a fourth shutdown time when the rotating speed of the engine decreases to zero.

Further, the engine control method of a hybrid vehicle is executed by the HCU, and in a process of executing the engine control method of a hybrid vehicle, the HCU is configured to: control the DCT and the automatic clutch to switch state by controlling a transmission control unit (TCU) of a vehicle; control the motor torque by controlling a motor control unit (MCU) of the vehicle; and control operation of the engine by controlling the ECU of the vehicle.

Compared with the prior art, the method for controlling the engine of the present invention ensures the smoothness and power performance of the vehicle during the travelling process of the engine, and avoids disturbances, which protects the power system of the vehicle, and improves the driving experience of the vehicle.

Another object of the present invention is to provide an engine control device for a hybrid vehicle, so as to solve the problem that it is prone to appear unsmoothness and power disturbances during the engine travelling control.

In order to achieve the above object, the technical solutions of the present invention are realized as follows.

An engine control device for a hybrid vehicle is provided, where an engine, an automatic clutch, a motor, and an input shaft of a DCT of the hybrid vehicle are connected in series in sequence, and a total torque outputted together by the engine and the motor is applied to a wheel end through an output shaft of the DCT, and the engine control device for a hybrid vehicle includes: an engine start control unit, configured to perform start control in the travelling process on the engine, where the engine start control unit is specifically configured to: from a first start time when a first start instruction for the engine is activated by a HCU, control an odd-numbered gear clutch or an even-numbered gear clutch of the DCT to switch from a closed state to a sliding state, and from the first start time to a second start time when a second start instruction for the engine is activated by an ECU, control a motor torque to increase, so that the total torque remains unchanged; remain the motor torque at the second start time unchanged from the second start time to a third start time when an oil pump of the engine starts to work; and control the motor torque to change from the third start time, so that a rotating speed of the engine changes synchronously with a rotating speed of the motor, and the total torque remains unchanged till an engine travelling start is completed.

Further, the engine control device for a hybrid vehicle further includes: an engine shutdown control unit, configured to perform travelling shutdown control on the engine, and the engine shutdown control unit is specifically configured to: from a first shutdown time when a shutdown instruction for the engine is activated by the HCU, control an engine torque to decrease and the motor torque to increase, so that the total torque remains unchanged; decrease torque applied to two ends of the automatic clutch to allow the automatic clutch to switch from the closed state to an open state from a second shutdown time when the engine torque decreases to zero; activate a second shutdown instruction for the engine at a third shutdown time when the torque applied to two ends of the automatic clutch decreases to zero, so that the rotating speed of the engine starts to decrease; determine a travelling shutdown process of the engine is completed from a fourth shutdown time when the rotating speed of the engine decreases to zero.

The engine control device for a hybrid vehicle has the same advantages as the above an engine control method for a hybrid vehicle relative to the prior art, which will not be repeated here.

Another object of the present invention is to provide a machine-readable storage medium, so as to solve the problem that it is prone to appear unsmoothness and power disturbances during the engine travelling control.

In order to achieve the above object, the technical solutions of the present invention are realized as follows.

A machine-readable storage medium stores instructions, where the instructions, when executed by a machine, allow the machine to perform the above method for controlling an engine.

The machine-readable storage medium has the same advantages as the above an engine control method for a hybrid vehicle relative to the prior art, which will not be repeated here.

Other features and advantages of the present invention will be described in detail in the following detailed description of the embodiments.

## BRIEF DESCRIPTION OF THE DRAWINGS

The accompanying drawings forming a part of the present invention are used to provide a further understanding of the present invention. Exemplary embodiments of the present invention and descriptions thereof are used to explain the present invention rather than constitute an undue limitation on the present invention. In the drawings:

FIG. 1 is a schematic structural view of a power system of a P2-typed series hybrid vehicle;

FIG. 2 is a schematic flowchart of start control of the engine in the travelling process in an embodiment of the present invention.

FIG. 3 is a control logic diagram of an example of applying control strategy for travelling start of an engine in an embodiment of the present invention;

FIG. 4 is a schematic flowchart of engine travelling shutdown control in an embodiment of the present invention;

FIG. 5 is a control logic diagram of an example of applying control strategy for travelling shutdown of an engine in an embodiment of the present invention; and

FIG. 6 is a schematic structural view of an engine control device for a hybrid vehicle in an embodiment of the present invention.

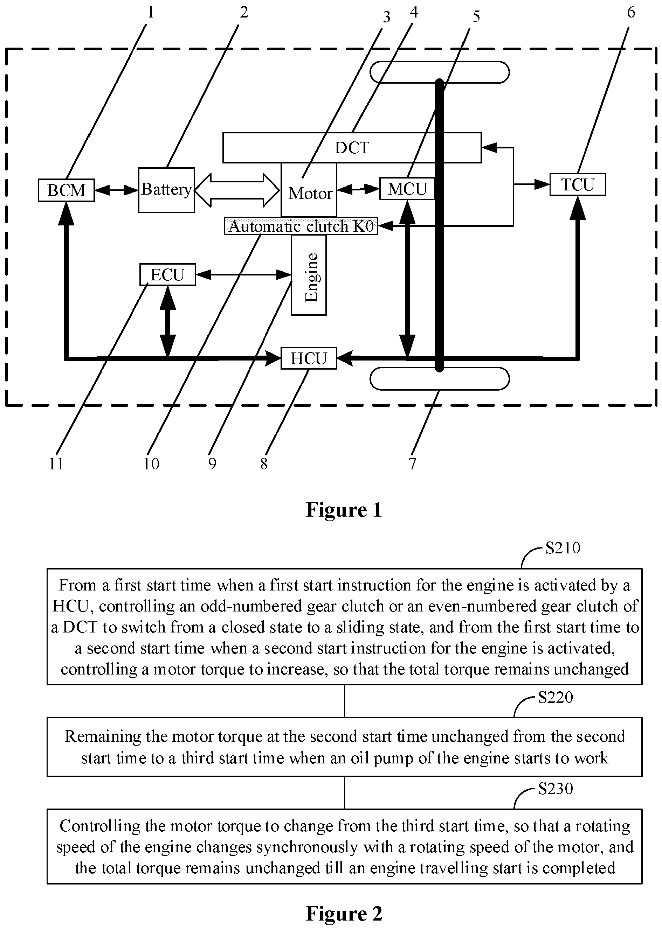

Reference numerals in Figures 1 to 6:

| | |
|---|---|
| 1 battery management system; | 2 battery; |
| 3 motor; | 4 DCT; |
| 5 motor control unit; | 6 transmission control unit; |
| 7 front wheel; | 8 hybrid vehicle control unit; |
| 9 engine; | 10 automatic clutch K0; |
| 11 engine control unit; | 600 engine control device; |
| 610 engine start control unit; | 620 engine shutdown control unit. |

## DETAILED DESCRIPTION OF THE EMBODIMENTS

It should be noted that, the embodiments of the present invention and features in the embodiments may be in combination with each other as long as there is no conflict.

In addition, the hybrid vehicle mentioned in the embodiments of the present invention takes the P2-typed series hybrid vehicle as an example, and FIG. 1 is a schematic structural view of a power system of the P2-typed series hybrid vehicle. As shown in FIG. 1, the power system of the P2-typed series hybrid vehicle may include: a battery management system (BMS) 1, a battery 2, a motor 3, a DCT 4, a MCU 5, a TCU 6, a front wheel 7, a HCU 8, an engine 9, an automatic clutch K0 10, an ECU 11. For this P2-typed series hybrid vehicle, the engine 9, the automatic clutch K0, the motor 3 and an input shaft of the DCT 4 are connected in series in sequence, and a total torque outputted by the motor 3 and the engine 9 as a whole (hereinafter referred to as the total torque, which can be understood interchangeably with a torque applied to wheel ends) is transferred by the input shaft of the DCT 4, and acts on the wheel ends (mainly the front wheel) by an output shaft of the DCT 4 to drive the vehicle forward or backward.

The ECU 11 is configured to control operations of the engine such as start, fuel injection and ignition, oil pump operation, etc.; the MCU 5 is configured to control the motor to output torque and brake for power generation, etc.; the BMS 1 is configured to control the charging and discharging of the battery, etc.; the TCU 6 is configured to control the DCT 4 to start, upshift and downshift, and is further configured to control the automatic clutch K0 to open, be in sliding friction and close; a controller of the HCU 8 has the highest priority, which is configured to coordinate the ECU 11, the MCU 5, the TCU 6 and other controllers of the vehicle to switch between various hybrid modes of the vehicle power system according to the driving intention and state of the vehicle. Each controller communicates with each other through CAN bus.

The clutch control method of the DCT 4 is consistent with the control method of the automatic clutch K0, and actuators are all hydraulically controlled. Specifically, the torque that needs to be applied to two ends of the clutch is first calculated as a whole, and the needed oil pressure is finally calculated.

Further, the P2-typed hybrid system mainly has three control modes, namely pure electric drive, pure gasoline drive and hybrid drive, which are specifically described as follows:

1) pure electric drive: the automatic clutch K0 is in an opened state, the engine 9 is in a shutdown state, only the motor 3 outputs power, and the motor torque finally acts on the wheels through the DCT 4;

2) pure gasoline drive: the automatic clutch K0 is in a closed state, the motor 3 does not output torque, and the torque from the engine 9 passes through the automatic clutch K0, a central shaft of the motor 3, and the DCT 4, and finally acts on the front wheels to drive the vehicle;

3) hybrid drive: the automatic clutch K0 is in the closed state, the motor 3 outputs torque, the torque from the engine 9 is coupled with the motor torque at the motor 3 through the automatic clutch K0, and finally acts on the front wheels through the DCT 4.

It should be noted that, in an embodiment of the present invention, the DCT includes two clutches, which may be referred to as an odd-numbered gear clutch and an even-numbered gear clutch, respectively, and whether it is odd or even depends on the gear corresponding to the clutch, and a clutch corresponds to the odd-numbered gears (e.g. 1st, 3rd, 5th, 7th gears) is referred to as the odd-numbered gear clutch, and a clutch corresponds to the even-numbered gears (e.g. 2nd, 4th, 6th, 8th gears) is referred to as the even-numbered gear clutch. When the transmission is shifted in a specific gear, only one clutch is closed, and the other clutch is opened, and in this embodiment of the present invention, the odd-numbered gear clutch is closed as an example. In addition, the odd-numbered gear clutch (or the even-numbered gear clutch) can be subdivided into a drive clutch and a driven clutch according to its positions, and the drive clutch is connected to the power source end. It should also be noted that the states of each clutch and automatic clutch K0 of the DCT include an opened state, a sliding state and a closed state, specifically, the clutch does not transmit power in the opened state, and transmits power in the closed state, and the sliding state is between the opened state and the closed state. The three states of the clutch belong to the conventional technology in the art, which can be understood with reference to the prior art.

Hereinafter, the present invention is described in detail with reference to the drawings and in conjunction with the embodiments.

An engine control method for a hybrid vehicle is provided according to an embodiment of the present invention, which is used to implement start control and/or shutdown control of an engine of the vehicle in a travelling process, and reference may be made to FIG. 1 for a corresponding hybrid vehicle structure. The start control and shutdown control of the engine during the travelling process will be introduced respectively below, and a case that the transmission is shifted in an odd-numbered gear (i.e., corresponding to the odd-numbered gear clutch) is taken as an example.

1. Control of engine travelling start

FIG. 2 is a schematic flowchart of control of engine travelling start in an embodiment of the present disclosure. Where, engine travelling start refers to starting the engine during a travelling process. As shown in FIG. 2, the following steps may be included.

In step S210, from a first start time when a first start instruction for the engine is activated by a HCU, an odd-numbered gear clutch or an even-numbered gear clutch of the DCT is controlled to switch from a closed state to a sliding state, and from the first start time to a second start time when a second start instruction for the engine is activated, motor torque is controlled to increase, so that the total torque remains unchanged.

For the two involved start instructions for the engine, the first start instruction is sent by the HCU to the ECU of the engine to notify the ECU to be prepared to start the engine, and the second start instruction is sent by the ECU to the engine to start the engine.

It can be understood that from the first start time to the second start time, the engine is expected to be started but has not been started, and the engine does not generate torque during this process. However, when the odd-numbered gear clutch of the DCT switches from the closed state to the sliding state, the loss of the transmission torque from the DCT to the front wheels will increase, thereby the motor torque is controlled to increase, so that the total torque remains unchanged. It is further understandable that the total torque remains unchanged, so that the speed difference between the master/slave of the odd-numbered gear clutch of the DCT will also be controlled within a set range. In addition, compared with a defect in the prior art that the HCU cannot precisely control the speed difference between the master/slave of the odd-numbered gear clutch (or the master/slave of the even-numbered gear clutch when the engine is started at an even-numbered gear), in this embodiment of the present invention, the overall torque remains unchanged and the speed difference between the master/slave of the odd-numbered gear clutch is remained within a precise range, which helps avoid unsmoothness and disturbances during the start process of the engine.

The master/slave relationship is a description of a steel plate and a friction plate in the same clutch, which is known to those skilled in the art and will not be described here.

In a preferred embodiment, in the step 210, that the motor torque is controlled to increase may include: the motor torque is controlled to increase by a first torque increment $T_{\Delta 1}$, where the first torque increment $T_{\Delta 1}$ is determined by the following equation (1):

$$T_{\Delta 1}=T_{original}\left(1/f_{effciency}-1\right)$$

where, $T_{original}$ represents the total torque, $f_{effciency}$ represents a clutch transmission efficiency coefficient of the DCT, and the transmission efficiency coefficient relates to a master/slave rotating speed difference between the odd-numbered gear clutch or even-numbered gear clutch of the DCT. It can also be seen from equation (1) that the total torque will affect the master/slave speed difference of the odd-numbered gear clutch of the DCT, so that the total torque remains unchanged, which is conducive to remaining the master/slave speed difference of the odd-numbered gear clutch of the DCT at a preset range.

In step S220, the motor torque at the second start time is remained unchanged from the second start time to a third start time when an oil pump of the engine starts to work.

From the second start time to the third start time, the engine has not been started yet, so no torque is generated, and after step S210 in which the motor torque is increased by the first torque increment $T_{\Delta 1}$, the torque applied to the wheel end (i.e., the total torque) remains unchanged, so that the motor torque remains unchanged after the motor torque is increased by the first torque increment $T_{\Delta 1}$ during a process from the second start time to the third start time.

In step S230, the motor torque is controlled to change from the third start time, so that the rotating speed of the engine changes synchronously with the rotating speed of the motor, and the total torque remains unchanged till the engine travelling start is completed.

It can be seen that by controlling the motor torque, in the engine start process, the engine can always keep the speed change synchronous with the motor, and whether the engine generates torque or not, the total torque is remained by adjusting the motor torque, which is beneficial to avoiding the vehicle from having unsmoothness and disturbances during the engine start process.

In a preferred embodiment, the step S230 may further include the following steps S231 to S234 (not shown in the figure).

In step S231, from the third start time, the motor torque to controlled to increase by a preset second torque increment $T_{\Delta 2}$, and the current increased motor torque remains unchanged till a fifth start time when the engine has been started, so that the rotating speed of the engine and the rotating speed of the motor rise synchronously, where a fourth start time when the rotating speed of the engine reaches close to an idle speed of the engine is present between the third start time and the fifth start time, and the engine is controlled to start at the fourth start time.

In step S232, the motor torque is increased to decrease by a preset third torque increment $T_{\Delta 3}$ from the fifth start time, so that the rotating speed of the engine continues to increase to the same as the rotating speed of the motor till a sixth start time, and the total torque remains unchanged.

In step S233, the motor torque is controlled to decrease by a preset fourth torque increment $T_{\Delta 4}$ from the sixth start time, so that the rotating speed of the engine decreases synchronously with the rotating speed of the motor, and the total torque remains unchanged.

In step S234, the motor torque is controlled to decrease relative to the increased engine torque from a seventh start time when the motor torque has decreased by the fourth torque increment $T_{\Delta 4}$ to an eighth start time when the engine travelling start is completed, so as to remain the total torque unchanged.

In this way, by steps S231 to S234, from the third start time when the oil pump of the engine starts to work to the eighth start time when the engine travelling start is completed, each process ensures that the rotating speed of the motor and the rotating speed of the engine change synchronously and the remains unchanged, thereby ensuring the smoothness of the vehicle in torque switching during the start process of the engine.

In a more preferred embodiment, the step S230 may further include: the torque applied to two ends of the automatic clutch increases from the sixth start time, to allow the automatic clutch to switch from the sliding state to the closed state. For example, the automatic clutch switches from the sliding state to the closed state, so that the torque outputted by the engine through the automatic clutch increases, which is beneficial to promoting the rapid start of the engine. However, in this process, in order to keep the total torque remains unchanged, in the step S233, the motor torque is controlled to decrease adaptively by adjusting the fourth torque increment $T_{\Delta 4}$.

In a more preferred embodiment, the step S230 may further include: the odd-numbered gear clutch or the even-numbered gear clutch of the DCT is controlled to switch from the sliding state to the closed state from the sixth start time. For example, the odd-numbered gear clutch or the even-numbered gear clutch of the DCT switches from the sliding state to the closed state, which allow the torque outputted by the engine through the automatic clutch increases, which is also beneficial to promoting the rapid start of the engine. Likewise, in this process, in the step S233, the motor torque is controlled to decrease adaptively by adjusting the fourth torque increment $T_{\Delta 4}$.

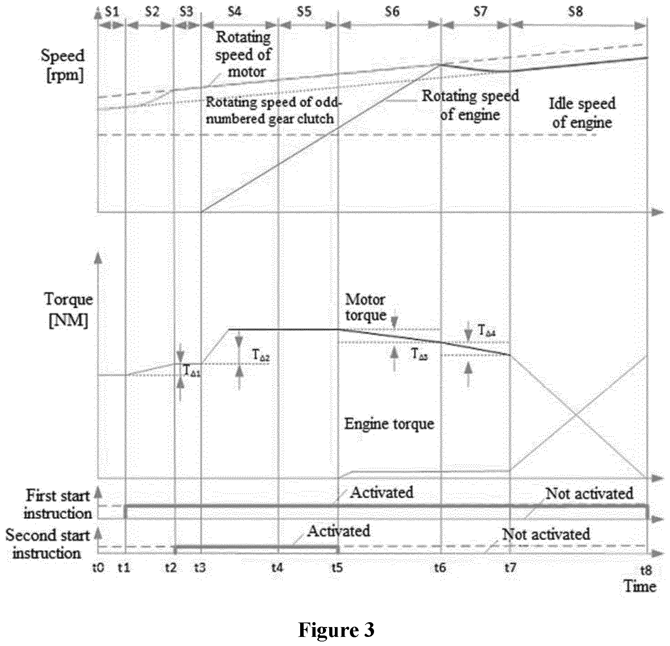

FIG. 3 is control logic diagram of an example of applying control strategy for travelling start of an engine in an embodiment of the present invention. Corresponding to the first start time to the eighth start time shown in FIG. 2, in FIG. 3, they are represented by t1 to t8, respectively.

In combination with FIG. 1 and FIG. 3, in this example, the engine travelling start control mainly includes the following eight steps S1 to S8.

In step S1, the vehicle is engaged in a forward gear, accelerating forward. There is no shift gears and the torque demand increases, and at time t1, the HCU determines whether the HCU needs to activate the first start instruction according to comprehensive calculations such as the vehicle speed and torque demand.

In step S2, at time t1, the first start instruction is activated by the HCU. In addition, at this stage, the state between the master/slave of the odd-numbered gear clutch of the DCT is controlled by the TCU to switch from the closed state to the sliding state by the proportion integration differentiation (PID) closed-loop speed control, and the speed difference between the master/slave of the odd-numbered gear clutch is controlled to be $S_{dct}$, where the $S_{dct}$ is a calibratable value, and $S_{dct}$ remains unchanged till time t6. In the sliding state of the clutch of the DCT, the transmission loss of torque of the clutch of the DCT increases. In order to ensure that the torque transmitted to the wheel end remains unchanged, the motor torque needs to increase by, such as $T_{\Delta 1}$ calculated by the above formula (1). From time t2 to time t3, the motor torque remains unchanged, and the second start instruction is activated at time t2.

The first start instruction for the engine is also referred to as the HCU start instruction, and the second start instruction is also referred to as the engine start instruction. In addition, PID control means that in the closed-loop control, a control deviation is formed according to a given value and an actual output value, and a control variable is formed by linear combination of proportional, integral and differential of the control deviation, so as to control the to be controlled object. Moreover, the PID control is a conventional control algorithm in the art, so the details thereof will not be described here.

In step S3, at time t3, the oil pump of the engine is controlled by the HCU through the ECU to start working.

In step S4, from time t3 to time t6, a closed-loop control is performed by the HCU on the torque applied to two ends of the automatic clutch K0 and the motor torque based on the rotating speed of the motor and the rotating speed of the engine, which ensures the stability of the rotating speed of the motor and the stable increase of the rotating speed of the engine; from time t3 to time t6, the HCU gradually increases the motor torque by $T_{\Delta 2}$ by controlling the MCU. The increased torque is mainly used to drag the rotating speed of the engine to be synchronized with the rotating speed of the motor; at time t4, the rotating speed of the engine is close to the idle speed. The ECU is controlled by the HCU to send a fuel injection ignition instruction to start the engine.

In step S5, at time t5, the engine has been started, and the second start instruction for the engine is turned off.

In step S6, the motor continues to drag the engine till time t6, and at the same time, the motor torque gradually decreases by $T_{\Delta 3}$, so that the rotating speed of the engine increases to be synchronized with the rotating speed of the motor.

In step S7, from time t6, the TCU is controlled by the HCU to gradually increase the torque and oil pressure applied to two ends of the automatic clutch K0, so that the state of K0 switches from the sliding state to a fully closed state, and the motor torque gradually decreases by $T_{\Delta 4}$, so that the rotating speed of the motor is synchronized with the rotating speed of the engine; at the same time, the state between the master/slave of the odd-numbered gear clutch is controlled by the TCU to switch from the sliding state to the closed state by PID control.

In step S8, from time t7 to time t8, the engine torque gradually increases, the motor torque gradually decreases, so that the overall output torque remains unchanged, which ensures the smoothness of the vehicle during torque switching; at time t8, all start actions have been completed, and the first start instruction is turned off by the HCU.

Through this example, the start process of the engine of the P2-typed hybrid vehicle in the travelling process involves a joint control sequence and control method of multiple components such as the engine, the motor, the automatic clutch K0, and the DCT. First, the total torque remains unchanged, and the speed difference between the master/slave of the odd-numbered gear clutch of the transmission is ensured to be accurately controlled. Secondly, in the process of dragging the engine, the HCU performs closed-loop control on the torque applied to two ends of the automatic clutch K0 and the motor torque based on the rotating speed of the motor and the rotating speed of the engine, mainly including: 1) when the rotating speed of the motor drops, the pressure at two ends of the automatic clutch K0 is appropriately decreased (the pressure is decreased by decreasing the torque), and the motor torque is increased; 2) when the rotating speed of the motor rises, the pressure at two ends of the automatic clutch K0 (increases the pressure by increasing the torque) is appropriately increased, and the motor torque is decreased; 3) when the rotating speed of the engine is close to a target speed, the pressure at two ends of the automatic clutch K0 should be appropriately increased, and the motor torque should be appropriately decreased.

Based on this, the smoothness and dynamic performance of the vehicle during the start process of the engine are ensured, the occurrence of disturbance is avoided, and the driving experience of the vehicle is improved.

2. Control of engine travelling shutdown

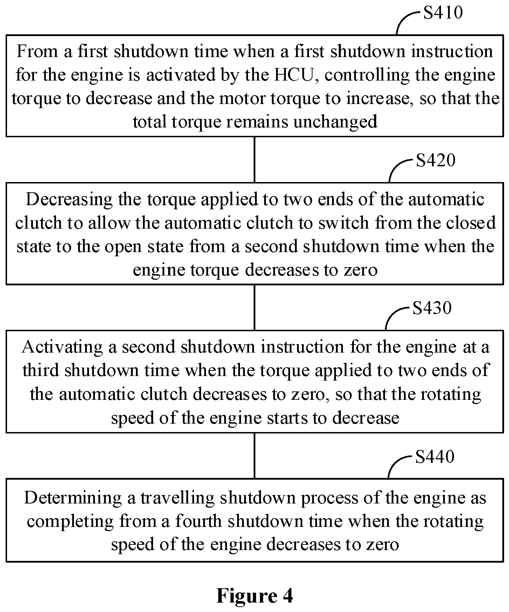

FIG. 4 is a schematic flowchart of control of engine travelling shutdown in an embodiment of the present disclosure. The engine travelling shutdown refers to shut down the engine during travelling. As shown in FIG. 4, the following steps may be included.

In step S410, from a first shutdown time when a first shutdown instruction for the engine is activated by the HCU, the engine torque is controlled to decrease and the motor torque is controlled to increase, so that the total torque remains unchanged.

In step S420, the torque applied to two ends of the automatic clutch is decreased to allow the automatic clutch to switch from the closed state to the open state from a second shutdown time when the engine torque decreases to zero.

The automatic clutch is switched from the closed state to the open state, so that the engine torque is further decreased because it is not transmitted to the wheel end, which is beneficial to promote the rapid shutdown of the engine.

In step S430, a second shutdown instruction for the engine is activated at a third shutdown time when the torque applied to two ends of the automatic clutch decreases to zero, so that the rotating speed of the engine starts to decrease.

For the two shutdown instructions for the engine involved, the first shutdown instruction is sent by the HCU to the ECU of the engine to notify the ECU to be prepared to stop the engine, and the second shutdown instruction is sent by the ECU to the engine to stop the engine. When the first shutdown instruction is activated, the engine is only expected to be stopped but has not been stopped, so the rotating speed of the engine remains unchanged, and only when the second shutdown instruction is activated, the rotating speed of the engine begins to decrease.

In step S440, a travelling shutdown process of the engine is determined as complete from a fourth shutdown time when the rotating speed of the engine decreases to zero.

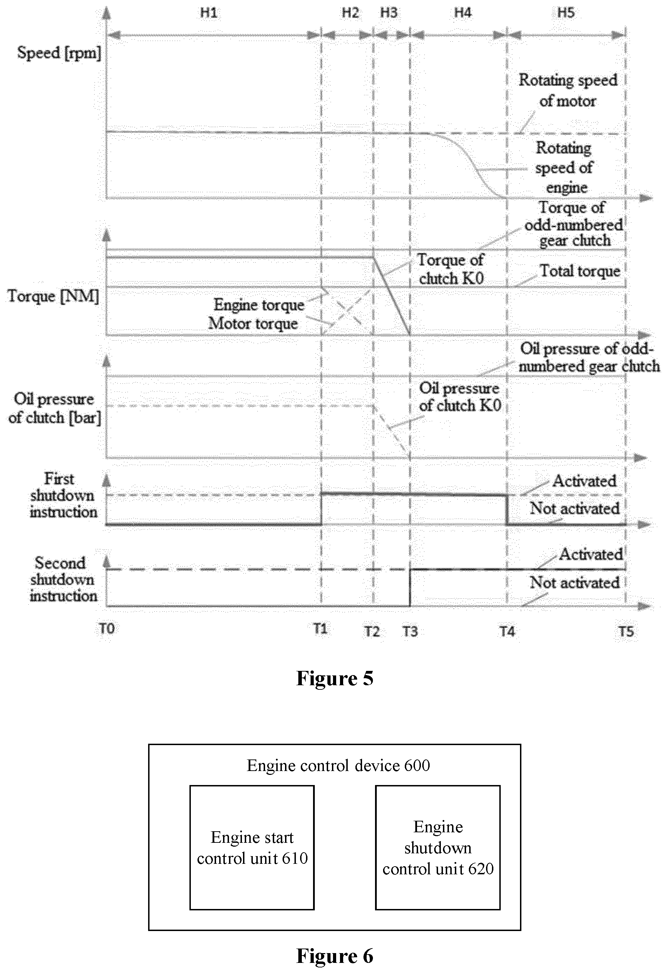

FIG. 5 is a control logic diagram of an example of applying control strategy for engine travelling shutdown in an embodiment of the present invention. Corresponding to the first shutdown time to the fourth shutdown time shown in FIG. 4, they are respectively represented by T1 to T4 in FIG. 5.

In combination with FIG. 1 and FIG. 5, in this example, the control of engine travelling shutdown mainly includes the following five steps H1 to H5.

In step H1, whether the first shutdown instruction for the engine needs to be activated at the time T1 or not is determined by the HCU by comprehensively considering the torque demand, the request from a driver, and the like.

In step H2, at this stage, the first shutdown instruction is activated by the HCU; from time T1 to T2, the engine torque gradually decreases to 0, and the motor torque gradually increases, so that the total torque remains unchanged.

In step H3, at this stage, the torque applied to two ends of the automatic clutch K0 and the oil pressure are decreased by the HCU by controlling the TCU, so that the state of the automatic clutch K0 switches from the closed state to the open state.

In step H4, at this stage, the second shutdown instruction for the engine is activated by the HCU through the ECU, the engine stops to perform fuel injection and ignition, and the rotating speed of the engine gradually drops to 0; at time T4, the entire engine shutdown control process is completed by the HCU, and the second shutdown instruction is turned off.

The first shutdown instruction for the engine is also referred to as an HCU shutdown instruction, and the second shutdown instruction is also referred to as an engine shutdown instruction.

In step H5, the engine is shut down, and the vehicle is completely driven by the motor.

Through this example, the travelling shutdown process of the P2-typed hybrid engine also involves the joint control sequence and control method of multiple components such as the engine, the motor, the automatic clutch K0 and the DCT, which continues to remain the total torque unchanged at an initial stage of the expected shutdown of the engine, so that the smoothness and dynamic performance of the vehicle are realized during the engine travelling shutdown process, and the occurrence of disturbance is avoided.

Further, regardless of whether it is for the above first part or the second part, the engine control method for the hybrid vehicle according to the embodiments of the present invention can be executed by the HCU, and in the process of executing the engine control method, the HCU is configured to: control the state switching of the DCT and the automatic clutch by controlling the TCU of the vehicle; control the motor torque by controlling the MCU of the vehicle; and control the operation of the engine by controlling the ECU of the vehicle. For example, in the above examples, the TCU is configured to switch the states such as opened state, sliding state, and closed state of the odd-numbered gear clutch or even-numbered gear clutch and the automatic clutch K0 of the DCT, and the MCU is configured to increase or decrease the motor torque. The fuel injection, ignition, start and shutdown of the engine can be done by the ECU. In the prior art, the HCU generally performs closed-loop speed control on the rotating speed of the motor based on the target speed required by the TCU. This solution enables all control to be realized through the HCU, which requires the HCU to continuously exchange information with the TCU, while a communication method between the HCU and TCU relying on the CAN bus has a certain communication delay, and the transmission has a hydraulic delay time (a total time delay of the CAN communication delay and the transmission delay is about 100ms), so that the HCU can accurately control the speed difference between the master/slave of the odd-numbered gear clutch, thereby causing the occurrence of unsmoothness and disturbance during start. In view of this, the TCU, the ECU, and the MCU of the embodiments of the present invention can implement the closed-loop control, respectively, thereby reducing the dependence on the CAN bus, and the speed difference between the master/slave of the odd-numbered gear clutches of the transmission can be accurately controlled.

FIG. 6 is a schematic structural view of an engine control device for a hybrid vehicle according to an embodiment of the present invention. The engine control device has the same inventive idea as the engine control method of the above embodiments. As shown in FIG. 6, the engine control device 600 includes: an engine shutdown control unit 610 configured to perform travelling shutdown control on the engine; and/or an engine shutdown control unit 620 configured to perform travelling shutdown control on the engine.

Preferably, the engine start control unit 610, which is configured to perform start control in the travelling process on the engine, includes: from the first start time when the first start instruction for the engine is activated by the HCU, control the odd-numbered gear clutch or the even-numbered gear clutch of the DCT to switch from the closed state to the sliding state, and from the first start time to the second start time when the second start instruction for the engine is activated by the ECU, control the motor torque to increase, so that the total torque remains unchanged; remain the motor torque at the second start time unchanged from the second start time to the third start time when the oil pump of the engine starts to work; and control the motor torque to change from the third start time, so that the rotating speed of the engine changes synchronously with the rotating speed of the motor, and the total torque remains unchanged till the engine travelling start is completed.

Preferably, the engine shutdown control unit 620, which is configured to perform travelling shutdown control on the engine, includes: from the first shutdown time when the shutdown instruction for the engine is activated by the HCU, control the engine torque to decrease and the motor torque to increase, so that the total torque remains unchanged; decrease torque applied to two ends of the automatic clutch to allow the automatic clutch to switch from the closed state to the open state from the second shutdown time when the engine torque decreases to zero; activate the second shutdown instruction for the engine at the third shutdown time when the torque applied to two ends of the automatic clutch decreases to zero, so that the rotating speed of the engine starts to decrease; determine the travelling shutdown process of the engine as completing from the fourth shutdown time when the rotating speed of the engine decreases to zero.

For other implementation details and effects of the engine control device, reference may be made to the above embodiments of the engine control method, which will not be described here.

A computer readable storage medium having instructions stored thereon is provided according to an embodiment of the present invention, and the instructions are used to allow a machine to execute the above engine control method.

A controller for running a program is provided according to an embodiment of the present invention, where the engine control method is implemented and executed when running the program. The controller is embodied as, for example, an HCU, and may also be embodied as a dedicated controller configured additionally.

An engine is provided according to an embodiment of the present invention, where the device includes a controller, a memory and a program stored in the memory and configured to be operated on the controller, and the controller, when executing the program, is configured to implement the engine control method. The device in the embodiment of the present invention may be embodied as an on-board device or a chip device capable of being integrated into the HCU of the vehicle or the like.

A computer program product is further provided according to an embodiment of the present invention, which is configured to execute procedures of the program initialized with the above engine control method as the computer program product is executed on the vehicle.

Those skilled in the art should understand that the embodiments of the present invention may be provided as a method, a system, or a computer program product. Therefore, the present invention may adopt the form of a complete hardware embodiment, a complete software embodiment, or an embodiment combining hardware and software. In addition, the present invention may be implemented in a form of one or more computer program products that are implemented in a computer usable storage medium (including but not limited to a disk memory, a CD-ROM, an optical memory and the like) storing a computer usable program code.

The present invention is described with reference to a flowchart and/or a block diagram of the method, the device (system), and the computer program product according to embodiments of the present invention. It should be understood

**EP 4 091 892 B1**

that each flow and/or block of the flowcharts and/or block diagrams and a combination of flows and/or blocks in the flowcharts and/or block diagrams may be implemented by computer program instructions. The computer program instructions may be installed in a general-purpose computer, a dedicated computer, an embedded processor or processors of other programmable data processing devices to generate a machine, such that the instructions executed by the computer or the processors of the other programmable data processing devices generate an device for implementing functions specified in one or more flows of the flow charts and/or one or more blocks of the block diagrams.

The computer program instructions may also be stored in a computer-readable memory capable of guiding a computer or other programmable data processing terminal device to operate in a specific manner, so that instructions stored in the computer-readable memory generate a manufacturing product including an instruction device. The instruction device implements the functions specified in one or more processes in the flowcharts and/or one or more blocks in the block diagrams.

These computer program instructions may also be loaded on a computer or other programmable data processing device, so that a series of operation steps are executed on the computer or the other programmable data processing device to produce a computer-implemented processing, and instructions executed on the computer or the other programmable data processing provide steps for implementing the functions specified in one or more processes in the flowchart and/or one or more blocks of the block diagram.

In a typical configuration, a computing device includes one or more processors (CPU), an input/output interface, a network interface and a memory.

The memory may include non-permanent memory, random access memory (RAM), and/or non-volatile memory in the computer-readable medium, such as read-only memory (ROM) or flash RAM. The memory is an example of the computer-readable medium.

The computer readable medium includes a permanent medium and a non-permanent medium, and a removable medium and a non-removable medium, and information storage may be performed by any method or technology. The information may be computer readable instructions, data structures, program modules, or other data. The computer readable storage medium includes but is not limited to a phase change random access memory (PRAM), a static random access memory (SRAM), a dynamic random access memory (DRAM), other types of random access memory (RAM), a read only memory (ROM), an electrically erasable programmable read-only memory (EEPROM), a flash memory or other memories, a compact disk read only memory (CD-ROM), a digital video disk (DVD) or other optical memories, a cassette magnetic tape, a disk memory, other magnetic storage devices, any other non-transmission medium or any devices capable of storing information that can be accessed by a computer device. The computer readable storage medium in the present invention does not include a computer readable transitory medium such as a modulated data signal and carrier.

It should be noted that, terms "include", "comprise" or any other variants thereof are intended to be non-exclusive. Therefore, a process, method, article or device including multiple elements includes not only the elements but also other elements that are not enumerated, or also include the elements inherent for the process, method, article or device. Unless expressively limited otherwise, the statement "comprising (including) a..." does not exclude the case that other identical elements exist in the process, method, product or device.

**Claims**

1. An engine control method for a hybrid vehicle, wherein, an engine (9), an automatic clutch, a motor (3), and an input shaft of a dual clutch transmission, DCT (4), of the hybrid vehicle are connected in series in this sequence, and a total torque outputted together by the engine (9) and the motor (3) is applied to a wheel end through an output shaft of the DCT (4), and the engine control method for the hybrid vehicle comprises:
performing control of engine travelling start, comprising:

from a first start time when a first start instruction for the engine (9) is activated by a hybrid control unit, HCU, controlling (S210) an odd-numbered gear clutch or an even-numbered gear clutch of the DCT (4) to switch from a closed state to a sliding state, and from the first start time to a second start time when a second start instruction for the engine (9) is activated by an engine control unit, ECU (11), controlling a motor torque to increase, so that the total torque remains unchanged;
remaining (S220) the motor torque at the second start time unchanged from the second start time to a third start time when an oil pump of the engine (9) starts to work; and
controlling (S230) the motor torque to change from the third start time, so that a rotating speed of the engine changes synchronously with a rotating speed of the motor (3), and the total torque remains unchanged till the engine travelling start is completed.

2. The engine control method of the hybrid vehicle according to claim 1, wherein, for a process from the first start time to the second start time, the controlling a motor torque to increase comprises:

the motor torque is controlled to increase a first torque increment $T_{\Delta 1}$, wherein the first torque increment $T_{\Delta 1}$ is determined by the following equation:

$$T_{\Delta 1} = T_{original}(1/f_{effciency} - 1)$$

wherein, $T_{original}$ represents the total torque, $f_{effciency}$ represents a clutch transmission efficiency coefficient of the DCT (4), and the transmission efficiency coefficient relates to a master/slave rotating speed difference between the odd-numbered gear clutch or even-numbered gear clutch of the DCT (4).

3. The engine control method of the hybrid vehicle according to claim 1, wherein, from the third start time, the controlling the motor torque to change comprises:

from the third start time, controlling the motor torque to increase by a preset second torque increment $T_{\Delta 2}$ and remaining the current increased motor torque unchanged till a fifth start time when the engine (9) has been started, so that the rotating speed of the engine (9) and the rotating speed of the motor (3) rise synchronously, wherein a fourth start time when the rotating speed of the engine (9) reaches close to an idle speed of the engine (9) is present between the third start time and the fifth start time, and controlling the engine (9) to start at the fourth start time;
controlling the motor torque to decrease by a preset third torque increment $T_{\Delta 3}$ from the fifth start time, so that the rotating speed of the engine (9) continues to increase to the same as the rotating speed of the motor till a sixth start time, and the total torque remains unchanged;
controlling the motor torque to decrease by a preset fourth torque increment $T_{\Delta 4}$ from the sixth start time, so that the rotating speed of the engine (9) decreases synchronously with the rotating speed of the motor (3), and the total torque remains unchanged; and
controlling the motor torque to decrease relative to the increased engine torque from a seventh start time when the motor torque has decreased by the fourth torque increment $T_{\Delta 4}$ to an eighth start time when the engine travelling start is completed, so as to remain the total torque unchanged.

4. The engine control method of the hybrid vehicle according to claim 3, wherein the performing the control of the engine travelling start further comprises:

increasing a torque applied to two ends of the automatic clutch from the sixth start time, to allow the automatic clutch to switch from the sliding state to the closed state; and/or
controlling the odd-numbered gear clutch or the even-numbered gear clutch of the DCT (4) to switch from the sliding state to the closed state from the sixth start time.

5. The engine control method of the hybrid vehicle according to claim 1, wherein the engine control method of the hybrid vehicle further comprises:
performing control of engine travelling shutdown, comprising:

from a first shutdown time when a first shutdown instruction for the engine (9) is activated by the HCU, controlling (S410) an engine torque to decrease and the motor torque to increase, so that the total torque remains unchanged;
decreasing (S420) torque applied to two ends of the automatic clutch to allow the automatic clutch to switch from the closed state to an open state from a second shutdown time when the engine torque decreases to zero;
activating (S430) a second shutdown instruction for the engine (9) at a third shutdown time when the torque applied to two ends of the automatic clutch decreases to zero, so that the rotating speed of the engine (9) starts to decrease;
determining (S440) a travelling shutdown process of the engine (9) as completing from a fourth shutdown time when the rotating speed of the engine (9) decreases to zero.

6. The engine control method of the hybrid vehicle according to claim 1, wherein the engine control method of a hybrid vehicle is executed by the HCU, and in a process of executing the engine control method of a hybrid vehicle, the HCU is configured to:

controlling the DCT (4) and the automatic clutch to switch state by controlling a transmission control unit, TCU of a vehicle;
controlling the motor torque by controlling a motor control unit, MCU of the vehicle; and
controlling operation of the engine (9) by controlling the ECU of the vehicle.

**7.** An engine control device (600) for a hybrid vehicle, wherein, an engine (9), an automatic clutch, a motor (3), and an input shaft of a dual clutch transmission, DCT (4), of the hybrid vehicle are connected in series in this sequence, and a total torque outputted together by the engine (9) and the motor (3) is applied to a wheel end through an output shaft of the DCT (4), and the engine control device (600) for the hybrid vehicle comprises:

an engine start control unit (610) configured to perform control of engine travelling start, comprising:

from a first start time when a first start instruction for the engine (9) is activated by a hybrid control unit, HCU, controlling an odd-numbered gear clutch or an even-numbered gear clutch of the DCT (4) to switch from a closed state to a sliding state, and from the first start time to a second start time when a second start instruction for the engine (9) is activated by an engine control unit, ECU, controlling a motor torque to increase, so that the total torque remains unchanged;
remaining the motor torque at the second start time unchanged from the second start time to a third start time when an oil pump of the engine (9) starts to work; and
controlling the motor torque to change from the third start time, so that a rotating speed of the engine changes synchronously with a rotating speed of the motor (3), and the total torque remains unchanged till an engine travelling start is completed.

**8.** The engine control device (600) for the hybrid vehicle according to claim 7, wherein the engine control device (600) for the hybrid vehicle further comprises:

an engine shutdown control unit (620) configured to perform travelling shutdown control on the engine (9), comprising:

from a first shutdown time when a shutdown instruction for the engine (9) is activated by the HCU, controlling an engine torque to decrease and the motor torque to increase, so that the total torque remains unchanged;
decreasing torque applied to two ends of the automatic clutch to allow the automatic clutch to switch from the closed state to an open state from a second shutdown time when the engine torque decreases to zero;
activating a second shutdown instruction for the engine (9) at a third shutdown time when the torque applied to two ends of the automatic clutch decreases to zero, so that the rotating speed of the engine (9) starts to decrease;
determining a travelling shutdown process of the engine (9) as completing from a fourth shutdown time when the rotating speed of the engine (9) decreases to zero.

**9.** A machine readable storage medium storing instructions, wherein the instructions, when executed by a machine, allow the machine to perform the engine control method according to any one of claims 1 to 6.

**Patentansprüche**

**1.** Verfahren zur Motorsteuerung für ein Hybridfahrzeug, wobei ein Verbrennungsmotor (9), eine automatische Kupplung, ein Motor (3) und eine Eingangswelle eines Doppelkupplungsgetriebes, DCT (4), des Hybridfahrzeugs in dieser Reihenfolge in Reihe geschaltet sind und ein von dem Verbrennungsmotor (9) und dem Motor (3) zusammen abgegebenes Gesamtdrehmoment über eine Ausgangswelle des DCT (4) auf ein Radende aufgebracht wird, und das Motorsteuerungsverfahren für das Hybridfahrzeug umfasst:
Durchführen einer Steuerung des Motorfahrstarts, umfassend:

ab einem ersten Startzeitpunkt, wenn eine erste Startanweisung für den Verbrennungsmotor (9) durch eine Hybridsteuereinheit, HCU, aktiviert wird, Steuern (S210) einer ungeradzahligen Getriebekupplung oder einer geradzahligen Getriebekupplung des DCT (4), um von einem geschlossenen Zustand in einen gleitenden Zustand zu wechseln, und ab dem ersten Startzeitpunkt bis zu einem zweiten Startzeitpunkt, wenn eine zweite Startanweisung für den Verbrennungsmotor (9) durch eine Motorsteuereinheit, ECU (11), aktiviert wird, Steuern eines Motordrehmoments, um es zu erhöhen, so dass das Gesamtdrehmoment unverändert bleibt;
Belassen (S220) des Motordrehmoments zur zweiten Startzeit unverändert von der zweiten Startzeit bis zu einer dritten Startzeit, wenn eine Ölpumpe des Verbrennungsmotors (9) zu arbeiten beginnt; und
Steuern (S230) des Motordrehmoments so, dass es sich ab dem dritten Startzeitpunkt ändert, so dass sich eine Drehzahl der Brennkraftmaschine synchron mit einer Drehzahl des Motors (3) ändert und das Gesamtdrehmoment unverändert bleibt, bis der Fahrstart der Brennkraftmaschine abgeschlossen ist.

2. Verfahren zur Motorsteuerung des Hybridfahrzeugs nach Anspruch 1, wobei für einen Vorgang vom ersten Startzeitpunkt bis zum zweiten Startzeitpunkt das Steuern eines zu erhöhenden Motordrehmoments umfasst:

das Motordrehmoment so gesteuert wird, dass ein erstes Drehmomentinkrement T$\Delta$1 erhöht wird, wobei das erste Drehmomentinkrement $T_{\Delta 1}$ durch die folgende Gleichung bestimmt wird:

$$T_{\Delta 1}=T_{original}\left(1/_{efficiency}-1\right)$$

wobei $T_{original}$ das Gesamtdrehmoment darstellt, $f_{effciency}$ einen Kupplungsübertragungswirkungskoeffizienten des DCT (4) darstellt und der Übertragungswirkungskoeffizient sich auf eine Master/Slave-Drehzahldifferenz zwischen der ungeradzahligen Zahnradkupplung oder der geradzahligen Zahnradkupplung des DCT (4) bezieht.

3. Verfahren zur Motorsteuerung des Hybridfahrzeugs nach Anspruch 1, wobei ab dem dritten Startzeitpunkt das Steuern der Änderung des Motordrehmoments umfasst:

Steuern des Motordrehmoments ab dem dritten Startzeitpunkt so, dass es um einen voreingestellten zweiten Drehmomentschritt $T_{\Delta 2}$ ansteigt, und Beibehalten des aktuell erhöhten Motordrehmoments bis zu einem fünften Startzeitpunkt, wenn der Verbrennungsmotor (9) gestartet wurde, so dass die Drehzahl des Verbrennungsmotors (9) und die Drehzahl des Motors (3) synchron ansteigen, wobei ein vierter Startzeitpunkt, zu dem die Drehzahl des Verbrennungsmotors (9) nahe an eine Leerlaufdrehzahl des Verbrennungsmotors (9) herankommt, zwischen dem dritten Startzeitpunkt und dem fünften Startzeitpunkt liegt, und Steuern des Verbrennungsmotors (9) so, dass er zu dem vierten Startzeitpunkt startet;
Steuern des Motordrehmoments so, dass es ab dem fünften Startzeitpunkt um ein voreingestelltes drittes Drehmomentinkrement T$\Delta$3 abnimmt, so dass die Drehzahl des Verbrennungsmotors (9) bis zu einem sechsten Startzeitpunkt weiter auf die gleiche Drehzahl wie die Drehzahl des Motors ansteigt und das Gesamtdrehmoment unverändert bleibt;
Steuern des Motordrehmoments so, dass es ab dem sechsten Startzeitpunkt um ein voreingestelltes viertes Drehmomentinkrement $T_{\Delta 4}$ abnimmt, so dass die Drehgeschwindigkeit des Verbrennungsmotors (9) synchron mit der Drehgeschwindigkeit des Motors (3) abnimmt und das Gesamtdrehmoment unverändert bleibt; und
Steuern des Motordrehmoments, um relativ zu dem erhöhten Motordrehmoment von einem siebten Startzeitpunkt, wenn das Motordrehmoment um das vierte Drehmomentinkrement T$\Delta$4 abgenommen hat, bis zu einem achten Startzeitpunkt, wenn der Motorfahrstart abgeschlossen ist, abzunehmen, so daß das Gesamtdrehmoment unverändert bleibt.

4. Verfahren zur Motorsteuerung des Hybridfahrzeugs nach Anspruch 3, wobei die Durchführung der Steuerung des Motorlaufstarts ferner Folgendes umfasst:

Erhöhen eines an zwei Enden der automatischen Kupplung angelegten Drehmoments ab dem sechsten Startzeitpunkt, um der automatischen Kupplung zu ermöglichen, vom gleitenden Zustand in den geschlossenen Zustand zu wechseln; und/oder
Steuern der Kupplung mit ungerader Gangzahl oder der Kupplung mit gerader Gangzahl des Gleichstromgetriebes (4), um ab dem sechsten Startzeitpunkt vom gleitenden Zustand in den geschlossenen Zustand zu schalten.

5. Verfahren zur Motorsteuerung des Hybridfahrzeugs nach Anspruch 1, wobei das Verfahren zur Motorsteuerung des Hybridfahrzeugs ferner umfasst:
Durchführen einer Steuerung der Motorfahrabschaltung, umfassend:

ab einem ersten Abschaltzeitpunkt, wenn eine erste Abschaltanweisung für den Motor (9) durch die HCU aktiviert wird, Steuern (S410) eines Motordrehmoments, um es zu verringern, und des Motordrehmoments, um es zu erhöhen, so dass das Gesamtdrehmoment unverändert bleibt;
Verringern (S420) des an zwei Enden der automatischen Kupplung angelegten Drehmoments, um der automatischen Kupplung zu ermöglichen, ab einem zweiten Abschaltzeitpunkt, wenn das Motordrehmoment auf Null sinkt, von dem geschlossenen Zustand in einen offenen Zustand zu wechseln;
Aktivieren (S430) eines zweiten Abschaltbefehls für den Motor (9) zu einem dritten Abschaltzeitpunkt, wenn das an zwei Enden der automatischen Kupplung angelegte Drehmoment auf Null sinkt, so dass die Drehzahl des Motors (9) zu sinken beginnt;

Bestimmen (S440) eines fahrenden Abschaltvorgangs des Motors (9) als Abschluss eines vierten Abschaltzeitpunkts, wenn die Drehzahl des Motors (9) auf Null sinkt.

6. Verfahren zur Motorsteuerung des Hybridfahrzeugs nach Anspruch 1, wobei das Motorsteuerungsverfahren eines Hybridfahrzeugs durch die HCU ausgeführt wird und die HCU in einem Prozess der Ausführung des Motorsteuerungsverfahrens eines Hybridfahrzeugs konfiguriert ist, um:

Steuern des DCT (4) und der automatischen Kupplung, um den Zustand zu wechseln, durch Steuern einer Getriebesteuereinheit, TCU, eines Fahrzeugs;
Steuern des Motordrehmoments durch Steuern eines Motorsteuergeräts, MCU, des Fahrzeugs; und
Steuern des Betriebs des Motors (9) durch Steuern der ECU des Fahrzeugs.

7. Motorsteuerungsvorrichtung (600) für ein Hybridfahrzeug, wobei ein Verbrennungsmotor (9), eine automatische Kupplung, ein Motor (3) und eine Eingangswelle eines Doppelkupplungsgetriebes, DCT (4), des Hybridfahrzeugs in dieser Reihenfolge in Reihe geschaltet sind und ein von dem Verbrennungsmotor (9) und dem Motor (3) zusammen abgegebenes Gesamtdrehmoment über eine Ausgangswelle des DCT (4) an ein Radende angelegt wird, und die Motorsteuerungsvorrichtung (600) für das Hybridfahrzeug umfasst:

eine Motorstartsteuerungseinheit (610), die konfiguriert ist, um eine Steuerung des Motorfahrstarts durchzuführen, umfassend:

ab einem ersten Startzeitpunkt, wenn ein erster Startbefehl für den Motor (9) durch eine Hybridsteuereinheit, HCU, aktiviert wird, Steuern einer ungeradzahligen Getriebekupplung oder einer geradzahligen Getriebekupplung des DCT (4), um von einem geschlossenen Zustand in einen gleitenden Zustand zu wechseln, und ab dem ersten Startzeitpunkt bis zu einem zweiten Startzeitpunkt, wenn ein zweiter Startbefehl für den Motor (9) durch eine Motorsteuereinheit, ECU, aktiviert wird, Steuern eines Motordrehmoments, um es zu erhöhen, so dass das Gesamtdrehmoment unverändert bleibt;
das Motordrehmoment zum zweiten Startzeitpunkt von dem zweiten Startzeitpunkt bis zu einem dritten Startzeitpunkt unverändert bleibt, wenn eine Ölpumpe des Motors (9) zu arbeiten beginnt; und
Steuern des Motordrehmoments so, dass es sich ab dem dritten Startzeitpunkt ändert, so dass sich eine Drehzahl der Brennkraftmaschine synchron mit einer Drehzahl des Motors (3) ändert und das Gesamtdrehmoment unverändert bleibt, bis ein Fahrstart der Brennkraftmaschine abgeschlossen ist.

8. Motorsteuerungsvorrichtung (600) für das Hybridfahrzeug nach Anspruch 7, wobei die Motorsteuerungsvorrichtung (600) für das Hybridfahrzeug ferner umfasst:
eine Motorabschaltsteuereinheit (620), die so konfiguriert ist, dass sie eine Fahrabschaltsteuerung für den Motor (9) durchführt, umfassend:

ab einem ersten Abschaltzeitpunkt, wenn ein Abschaltbefehl für den Motor (9) durch die HCU aktiviert wird, ein Motordrehmoment so zu steuern, dass es abnimmt, und das Motordrehmoment so zu steuern, dass es zunimmt, so dass das Gesamtdrehmoment unverändert bleibt;
Verringern des auf zwei Enden der automatischen Kupplung aufgebrachten Drehmoments, um der automatischen Kupplung zu ermöglichen, ab einer zweiten Abschaltzeit, wenn das Motordrehmoment auf Null abfällt, vom geschlossenen Zustand in einen offenen Zustand zu wechseln;
Aktivieren eines zweiten Abschaltbefehls für den Motor (9) zu einem dritten Abschaltzeitpunkt, wenn das an zwei Enden der automatischen Kupplung angelegte Drehmoment auf Null sinkt, so dass die Drehzahl des Motors (9) zu sinken beginnt;
Bestimmen eines fahrenden Abschaltvorgangs des Motors (9) als Beendigung ab einem vierten Abschaltzeitpunkt, wenn die Drehzahl des Motors (9) auf Null sinkt.

9. Maschinenlesbares Speichermedium, auf dem Anweisungen gespeichert sind, wobei die Anweisungen, wenn sie von einer Maschine ausgeführt werden, der Maschine ermöglichen, das Verfahren zur Motorsteuerung nach einem der Ansprüche 1 bis 6 durchzuführen.

**Revendications**

1. Procédé de commande de moteur thermique pour un véhicule hybride, sachant qu'un moteur thermique (9), un embrayage automatique, un moteur électrique (3), et un arbre d'entrée d'une transmission à double embrayage (DCT) (4), du véhicule hybride sont connectés en série dans cet ordre, et un couple total sorti conjointement par le moteur thermique (9) et le moteur électrique (3) est appliqué à une extrémité de roue via un arbre de sortie de la DCT (4), et le procédé de commande de moteur thermique pour le véhicule hybride comprend :
l'exécution d'une commande de démarrage de moteur thermique en déplacement, comprenant :

   depuis un premier temps de démarrage où une première instruction de démarrage pour le moteur thermique (9) est activée par une unité de commande hybride (HCU), la commande (S210) d'un embrayage de vitesse impaire ou d'un embrayage de vitesse paire de la DCT (4) pour qu'il passe d'un état fermé à un état de glissement, et depuis le premier temps de démarrage jusqu'à un deuxième temps de démarrage où une deuxième instruction de démarrage pour le moteur thermique (9) est activée par une unité de commande de moteur thermique (ECU) (11), la commande d'un couple de moteur électrique pour qu'il augmente, de telle sorte que le couple total reste inchangé ;
   le fait de maintenir (S220) inchangé le couple de moteur électrique au deuxième temps de démarrage depuis le deuxième temps de démarrage jusqu'à un troisième temps de démarrage où une pompe à huile du moteur thermique (9) commence à fonctionner ; et
   la commande (S230) du couple de moteur électrique pour qu'il change depuis le troisième temps de démarrage, de telle sorte qu'une vitesse de rotation du moteur thermique change de manière synchrone à une vitesse de rotation du moteur électrique (3) et le couple total reste inchangé jusqu'à ce que le démarrage de moteur thermique en déplacement soit achevé.

2. Le procédé de commande de moteur thermique du véhicule hybride selon la revendication 1, sachant que, pour un processus depuis le premier temps de démarrage jusqu'au deuxième temps de démarrage, la commande d'un couple de moteur électrique pour qu'il augmente comprend :

   le couple de moteur électrique est commandé pour qu'il augmente d'un premier incrément de couple $T_{\Delta 1}$, sachant que le premier incrément de couple $T_{\Delta 1}$ est déterminé par l'équation suivante :

$$T_{\Delta 1} = T_{original}(1/f_{efficiency} - 1)$$

   sachant que $T_{original}$ représente le couple total, $f_{efficiency}$ représente un coefficient d'efficience de transmission d'embrayage de la DCT (4), et le coefficient d'efficience de transmission se rapporte à une différence de vitesse de rotation maître/esclave entre l'embrayage de vitesse impaire ou l'embrayage de vitesse paire de la DCT (4).

3. Le procédé de commande de moteur thermique du véhicule hybride selon la revendication 1, sachant que, depuis le troisième temps de démarrage, la commande du couple de moteur électrique pour qu'il change comprend :

   depuis le troisième temps de démarrage, la commande du couple de moteur électrique pour qu'il augmente d'un deuxième incrément de couple $T_{\Delta 2}$ prédéfini et le fait de maintenir inchangé le couple de moteur électrique augmenté actuel jusqu'à un cinquième temps de démarrage où le moteur thermique (9) a été démarré, de telle sorte que la vitesse de rotation du moteur thermique (9) et la vitesse de rotation du moteur électrique (3) augmentent de manière synchrone, sachant qu'un quatrième temps de démarrage où la vitesse de rotation du moteur thermique (9) est proche d'une vitesse de roue libre du moteur thermique (9) est présent entre le troisième temps de démarrage et le cinquième temps de démarrage, et la commande du moteur thermique (9) pour qu'il démarre au quatrième temps de démarrage ;
   la commande du couple de moteur pour qu'il diminue d'un troisième incrément de couple $T_{\Delta 3}$ prédéfini depuis le cinquième temps de démarrage, de telle sorte que la vitesse de rotation du moteur thermique (9) continue d'augmenter de la même manière que la vitesse de rotation du moteur électrique jusqu'à un sixième temps de démarrage, et le couple total reste inchangé ;
   la commande du couple de moteur électrique pour qu'il diminue d'un quatrième incrément de couple $T_{\Delta 4}$ prédéfini depuis le sixième temps de démarrage, de telle sorte que la vitesse de rotation du moteur thermique (9) diminue de manière synchrone à la vitesse de rotation du moteur électrique (3), et le couple total reste inchangé ; et
   la commande du couple de moteur électrique pour qu'il diminue par rapport au couple de moteur thermique augmenté depuis un septième temps de démarrage où le couple de moteur électrique a diminué du quatrième incrément de couple $T_{\Delta 4}$ jusqu'à un huitième temps de démarrage où le démarrage de moteur thermique en déplacement est achevé, de manière à maintenir le couple total inchangé.

4. Le procédé de commande de moteur thermique du véhicule hybride selon la revendication 3, sachant que l'exécution de la commande du démarrage de moteur thermique en déplacement comprend en outre :

l'augmentation d'un couple appliqué à deux extrémités de l'embrayage automatique depuis le sixième temps de démarrage, pour permettre à l'embrayage automatique de passer de l'état de glissement à l'état fermé ; et/ou la commande de l'embrayage de vitesse impaire ou de l'embrayage de vitesse paire de la DCT (4) pour qu'il passe de l'état de glissement à l'état fermé depuis le sixième temps de démarrage.

5. Le procédé de commande de moteur thermique du véhicule hybride selon la revendication 1, sachant que le procédé de commande de moteur thermique du véhicule hybride comprend en outre :
l'exécution d'une commande de l'arrêt de moteur thermique en déplacement, comprenant :

depuis un premier temps d'arrêt où une première instruction d'arrêt pour le moteur thermique (9) est activée par l'HCU, la commande (S410) d'un couple de moteur thermique pour qu'il diminue et du couple de moteur électrique pour qu'il augmente, de telle sorte que le couple total reste inchangé ;
la diminution (S420) d'un couple appliqué à deux extrémités de l'embrayage automatique pour permettre à l'embrayage automatique de passer de l'état fermé à un état ouvert depuis un deuxième temps d'arrêt où le couple de moteur thermique diminue à zéro ;
l'activation (S430) d'une deuxième instruction d'arrêt pour le moteur thermique (9) à un troisième temps d'arrêt où le couple appliqué à deux extrémités de l'embrayage automatique diminue à zéro, de telle sorte que la vitesse de rotation du moteur thermique (9) commence à diminuer ;
le fait de déterminer (S440) qu'un processus d'arrêt en déplacement du moteur thermique (9) s'achève depuis un quatrième temps d'arrêt où la vitesse de rotation du moteur thermique (9) diminue à zéro.

6. Le procédé de commande de moteur thermique du véhicule hybride selon la revendication 1, sachant que le procédé de commande de moteur thermique d'un véhicule hybride est exécuté par l'HCU, et dans un processus d'exécution du procédé de commande de moteur thermique d'un véhicule hybride, l'HCU est configurée pour :

commander la DCT (4) et l'embrayage automatique pour qu'ils changent d'état en commandant une unité de commande de transmission (TCU) d'un véhicule ;
commander le couple de moteur électrique en commandant une unité de commande de moteur électrique (MCU) du véhicule ; et
commander le fonctionnement du moteur thermique (9) en commandant l'ECU du véhicule.

7. Dispositif de commande de moteur thermique (600) pour un véhicule hybride, sachant qu'un moteur thermique (9), un embrayage automatique, un moteur électrique (3), et un arbre d'entrée d'une transmission à double embrayage (DCT) (4) du véhicule hybride sont connectés en série dans cet ordre, et un couple total sorti conjointement par le moteur thermique (9) et le moteur électrique (3) est appliqué à une extrémité de roue via un arbre de sortie de la DCT (4), et le dispositif de commande de moteur thermique (600) pour le véhicule hybride comprend :
une unité de commande de démarrage de moteur thermique (610) configurée pour exécuter une commande d'un démarrage de moteur thermique en déplacement, comprenant :

depuis un premier temps de démarrage où une première instruction de démarrage pour le moteur thermique (9) est activée par une unité de commande hybride (HCU), la commande d'un embrayage de vitesse impaire ou d'un embrayage de vitesse paire de la DCT (4) pour qu'il passe d'un état fermé à un état de glissement, et depuis le premier temps de démarrage jusqu'à un deuxième temps de démarrage où une deuxième instruction de démarrage pour le moteur thermique (9) est activée par une unité de commande de moteur thermique (ECU), la commande d'un couple de moteur électrique pour qu'il augmente, de telle sorte que le couple total reste inchangé ;
le fait de maintenir inchangé le couple de moteur électrique au deuxième temps de démarrage depuis le deuxième temps de démarrage jusqu'à un troisième temps de démarrage où une pompe à huile du moteur thermique (9) commence à fonctionner ; et
la commande du couple de moteur électrique pour qu'il change depuis le troisième temps de démarrage, de telle sorte qu'une vitesse de rotation du moteur thermique change de manière synchrone à une vitesse de rotation du moteur électrique (3), et le couple total reste inchangé jusqu'à ce qu'un démarrage de moteur thermique en déplacement soit achevé.

8. Le dispositif de commande de moteur thermique (600) pour le véhicule hybride selon la revendication 7, sachant que le dispositif de commande de moteur thermique (600) pour le véhicule hybride comprend en outre :
une unité de commande d'arrêt de moteur thermique (620) configurée pour exécuter une commande d'arrêt en déplacement sur le moteur thermique (9), comprenant :

depuis un premier temps d'arrêt où une instruction d'arrêt pour le moteur thermique (9) est activée par l'HCU, la commande d'un couple de moteur thermique pour qu'il diminue et du couple de moteur électrique pour qu'il augmente, de telle sorte que le couple total reste inchangé ;
la diminution d'un couple appliqué à deux extrémités de l'embrayage automatique pour permettre à l'embrayage automatique de passer de l'état fermé à un état ouvert depuis un deuxième temps d'arrêt où le couple de moteur thermique diminue à zéro ;
l'activation d'une deuxième instruction d'arrêt pour le moteur thermique (9) à un troisième temps d'arrêt où le couple appliqué à deux extrémités de l'embrayage automatique diminue à zéro, de telle sorte que la vitesse de rotation du moteur thermique (9) commence à diminuer ;
le fait de déterminer qu'un processus d'arrêt en déplacement du moteur thermique (9) s'achève depuis un quatrième temps d'arrêt où la vitesse de rotation du moteur thermique (9) diminue à zéro.

9. Support de stockage lisible par machine stockant des instructions, sachant que les instructions, lorsqu'elles sont exécutées par une machine, permettent à la machine d'exécuter le procédé de commande de moteur thermique selon l'une quelconque des revendications 1 à 6.

**Figure 1**

S210

From a first start time when a first start instruction for the engine is activated by a HCU, controlling an odd-numbered gear clutch or an even-numbered gear clutch of a DCT to switch from a closed state to a sliding state, and from the first start time to a second start time when a second start instruction for the engine is activated, controlling a motor torque to increase, so that the total torque remains unchanged

S220

Remaining the motor torque at the second start time unchanged from the second start time to a third start time when an oil pump of the engine starts to work

S230

Controlling the motor torque to change from the third start time, so that a rotating speed of the engine changes synchronously with a rotating speed of the motor, and the total torque remains unchanged till an engine travelling start is completed

**Figure 2**

**Figure 3**

S410

From a first shutdown time when a first shutdown instruction for the engine is activated by the HCU, controlling the engine torque to decrease and the motor torque to increase, so that the total torque remains unchanged

S420

Decreasing the torque applied to two ends of the automatic clutch to allow the automatic clutch to switch from the closed state to the open state from a second shutdown time when the engine torque decreases to zero

S430

Activating a second shutdown instruction for the engine at a third shutdown time when the torque applied to two ends of the automatic clutch decreases to zero, so that the rotating speed of the engine starts to decrease

S440

Determining a travelling shutdown process of the engine as completing from a fourth shutdown time when the rotating speed of the engine decreases to zero

**Figure 4**

**Figure 5**

**Figure 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 109094553 A